Europäisches Patentamt

European Patent Office

Office européen des brevets

(19)

(11) Publication number: **0 307 614 B1**

(12) # EUROPEAN PATENT SPECIFICATION

(45) Date of publication of patent specification: **05.08.92** (51) Int. Cl.⁵: **A23L 1/16, A21C 9/06**

(21) Application number: **88112915.9**

(22) Date of filing: **09.08.88**

(54) Ravioli style food product.

(30) Priority: **15.09.87 US 96453**

(43) Date of publication of application:
**22.03.89 Bulletin 89/12**

(45) Publication of the grant of the patent:
**05.08.92 Bulletin 92/32**

(84) Designated Contracting States:
**AT BE CH DE ES FR GB GR IT LI LU NL SE**

(56) References cited:
**EP-A- 0 206 898**
**FR-A- 2 140 458**
**FR-A- 2 578 393**
**US-A- 3 111 914**
**US-A- 4 381 906**

(73) Proprietor: **SOCIETE DES PRODUITS NESTLE S.A.**
**Case postale 353**
**CH-1800 Vevey(CH)**

(72) Inventor: **Eureka, John**
**6135 Carsten Road**
**Medina Ohio 44256(US)**
Inventor: **Law, Linda K.**
**4681 Dalebridge Road**
**Warrensville Heights Ohio 44128(US)**
Inventor: **Marsh, David C.**
**36055 Jackson Road**
**Chagrin Falls Ohio 44022(US)**

EP 0 307 614 B1

## Description

The present invention relates generally to the art of preparing dough based food products and more particularly to the preparation of a new ravioli style food product having a horizontally flanged periphery with a multiplicity of crimps therearound. The present invention is directed to an inventive method and apparatus for preparing such ravioli style food products as well as to the articles themselves.

The present invention is described throughout this application with particular reference to the large scale commercial preparation of precooked, frozen or canned ravioli style food products. It will, however, be appreciated that the invention is equally applicable to the small scale preparation of such food items and especially to the home preparation of ravioli using small, commercially available ravioli making machines.

"Ravioli" is an Italian word, which, upon literal translation to the English language, means "little turnip". By definition, the term ravioli refers to "small casings of dough, often square, containing seasoned ground meat, cheese, etc., boiled and served usually in a savory tomato sauce". Webster's New World Dictionary (Simon and Schuster, 1980).

Ravioli and ravioli style food products are particularly well suited for commercial preparation as canned or frozen food products and for subsequent distribution to consumers through grocery store outlets. This is due largely to their broad consumer appeal, physical consistency which is suitable for reheating by microwave or other means, variability of fillings, variability of sauces, and cost factors which come into play when determining which types of food products are most suitable for the consumer grocery market.

The commercial preparation of frozen or canned ravioli style food products often involves abrupt thermal changes and considerable physical handling. Often times, ravioli products are prepared in mass quantities, blanched or precooked, mixed with sauce, packaged, frozen and then finally reheated prior to home consumption. Such thermal cycling and vigorous handling can cause the dough sheets of the products to separate, often resulting in a loss of filling material. Such degradation will generally render the product unappealing to consumers.

Brief Summary Of The Invention

The above-mentioned problems are overcome by the present invention which provides a novel ravioli style food product wherein two separate dough sheets are compressively conjoined about their peripheries so as to form a horizontal flange surrounding a bulbous midregion wherein filling material is encapsulated. Firm interlocking of the dough sheets is accomplished by providing a number of crimps in a predetermined pattern on a surface of the peripheral flange, such crimps being arranged and formed in a manner which results in even and complete interlocking of the dough sheets while providing a food product which may be prepared economically and reproducably which is appetizing and enticing to consumers.

In accordance with the present invention, there is provided a novel ravioli style food product comprising first and second dough sheets with a portion of the filling material deposited therebetween. The dough sheets are interfacially, compressively joined at their peripheries so as to form a peripheral flange around the food product and to thereby accomplish firm interlocking of the dough sheets and to encapsulate the filling material therewithin. The peripheral flange is provided with a number of crimps arranged in a predetermined pattern on at least one surface of the flange, each such crimp having a predetermined shape.

In accordance with another aspect of the present invention, one of the dough sheets is of a generally planar configuration while the other dough sheet is provided with a generally planar periphery and a bulbous central area. The dough sheets are compressively conjoined and crimped about their peripheries, thereby giving rise to a ravioli style food product which is generally flat on the bottom, having a raised bulbous top and a horizontal peripheral flange with generally semi-cylindrical crimps arranged therearound.

In accordance with yet another aspect of the invention, the above described semi-cylindrical crimps may be positioned equidistantly or non-equidistantly from one another.

In accordance with yet another aspect of the present invention, the outer ends of the semi-cylindrical crimps may be cut perpendicularly or angularly with respect to the major surfaces of the peripheral flange on which they are located.

In accordance with a further aspect of the present invention, the outer ends of the semi-cylindrical crimps may be in the configuration of an inclined plane, quarter sphere or prism.

In accordance with a still further object of the present invention, the ravioli style food product is of a generally round or ovoid overall configuration. The ratio of major to minor axis of raviolis having an ovoid configuration is preferably less than about 3:1.

In accordance with a still further aspect of the present invention, there is provided a method for the repetitive and reproducable production of the ravioli style food product whereby a first dough sheet is moved along a feed line such that at least a portion of the sheet will be in a generally horizontal plane at at least one point on the feedline; indenting the first dough sheet at one position on the feed line; depositing a portion of filling material within the indentation at a second position on the feed line; positioning a second dough sheet so as to interface with the first dough sheet at a third position on said feed line and compressively conjoining the dough sheets to form a compressed dough flange around each indentation wherein filling material is contained such that the flange is provided with a number of semi-cylindrical crimps on at least one surface, and cutting away excess dough from the outer edge of the peripheral flange.

In accordance with yet a further aspect of the present invention, there is provided an apparatus by which the above described ravioli style food product may be repetitively and reproducably prepared.

In accordance with a still further aspect of the present invention, there is provided an improved ravioli style food product which is resistant to problems of dough sheet separation and degradation during handling, such improvement comprising a flange of compressed dough extending around the periphery of the food product and having a multiplicity of semi-cylindrical crimps positioned about a surface of said flange, each such crimp extending generally from the inner edge of the peripheral flange to the outer edge of the peripheral flange.

In accordance with a still further aspect of the invention, the multiple semi-cylindrical crimps of the peripheral flange are of significantly greater thickness and overall mass than the thinner regions of the flange which exist between the crimps. Due to the increased thickness of the crimps, the dough at the center of each crimp will cook at a slower rate than dough at the center of the thin regions of the flange. Such will result in a comparative retention of pliability or cohesiveness of the dough at the center of each crimp and, accordingly, a decreased likelihood that the product will separate or degrade during handling.

Further objects and advantages of the invention will be apparent from the following detailed description of a preferred embodiment thereof and from the accompanying drawings.

It is appreciated that products of the present invention may be prepared in numerous sizes and configurations. The method and apparatus for preparing such products may, accordingly, vary somewhat with respect to the desired size and configuration of the final product. The preferred embodiment described herein is a generally round shaped ravioli having an hemispherical, bulbous area at its center with a peripheral dough flange extending around such bulbous central portion and semi-cylindrical crimps extending radially about the flange. Ravioli style food products of the present invention may, however, be prepared in many other shapes so long as they employ the inventive concept of a peripheral flange having semi-cylindrical crimps spaced therearound.

The cutting of the outside diameter of the ravioli may be accomplished either by a separate cutting step or by incorporating a cutting surface into the die from which the ravioli is formed. The appearance and cut angle of the cut outside diameter may vary somewhat depending on the particular cutting means employed.

Brief Description Of The Drawings

FIGURE 1 is a perspective view of the novel ravioli having a preferred round shape and an outer flange having radial, semi-cylindrical crimps on its upper surface;

FIGURE 2 is a plan view of FIGURE 1;

FIGURE 3 is a schematic representation of the novel apparatus whereby ravioli style products of the present invention may be prepared;

FIGURE 4 is an enlarged cross-sectional view taken on line 4-4 of FIGURE 3 showing the indentation of the first dough sheet;

FIGURE 5 is a cross-sectional view taken on line 5-5 of FIGURE 3 showing the addition of filling material to the indented portion of said first dough sheet;

FIGURE 6 is a cross-sectional view taken on line 6-6 of FIGURE 3 showing the compressive conjoining of a second dough sheet with said first dough sheet;

FIGURE 7 is a cross-sectional view taken on line 7-7 of FIGURE 3 showing the ejection of the finished, unblanced ravioli product from the apparatus;

FIGURE 8 is a plan view taken on line 8-8 of FIGURE 3 showing the cavity of a tool for production of the ravioli style food product of the present invention;

FIGURE 9 is a further enlarged cross-section view taken on line 9-9 of FIGURE 8;

FIGURE 10A shows schematically two separate dough sheets positioned adjacent to one another;

FIGURE 10B shows the initial compression of the dough sheets of FIGURE 10A;

FIGURE 10C shows further compression of the dough sheets of 10A, with the dough of the top sheet and bottom sheet becoming mixed as dough is compressed into the semi-cylindrical indentation of the forming die;

FIGURE 10D shows full compression of the dough sheet whereby the dough of the top and bottom sheets is fully mixed and cmpressively conjoined;
FIGURE 11A shows two dough sheets positioned adjacent to one another;
FIGURE 11B shows the initial compression of the two dough sheets by the method of the prior art; and,
FIGURE 11C shows further compression of the dough sheets in accordance with the prior art.

Description Of The Preferred Embodiment

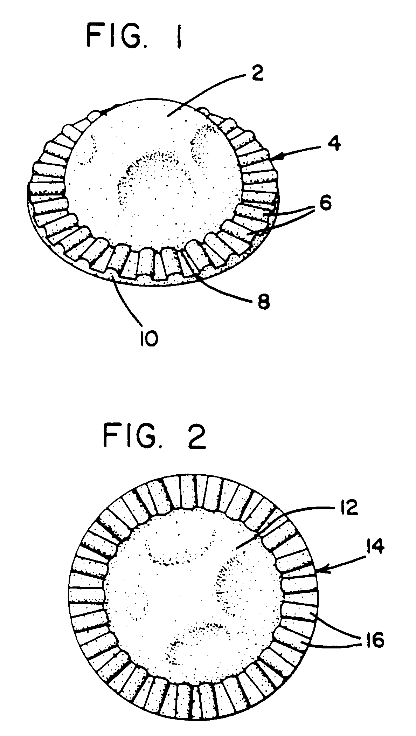

Referring now to the drawings wherein the showings are for the purpose of illustrating a preferred embodiment of the invention, FIGURE 1 shows a generally round ravioli style food product of the present invention having a generally flat underside with a bulbous central portion 2 and a peripheral flange 4 extending therearound. The upper surface of the flange 4 is provided with a multiplicity of semi-cylindrical crimps 6, each extending radially from the outer edge 8 of bulbous central portion 2 to the outer diameter of flange 4. In the preferred embodiment shown in FIGURE 1, the outer edge of flange 4 is cut at a slight angle 10 with respect to the horizontal surfaces of flange 4.

FIGURE 2 is essentially a plan view of FIGURE 1 showing the bulbous central portion 12, a peripheral flange 14 and semi-cylindrical crimps 16.

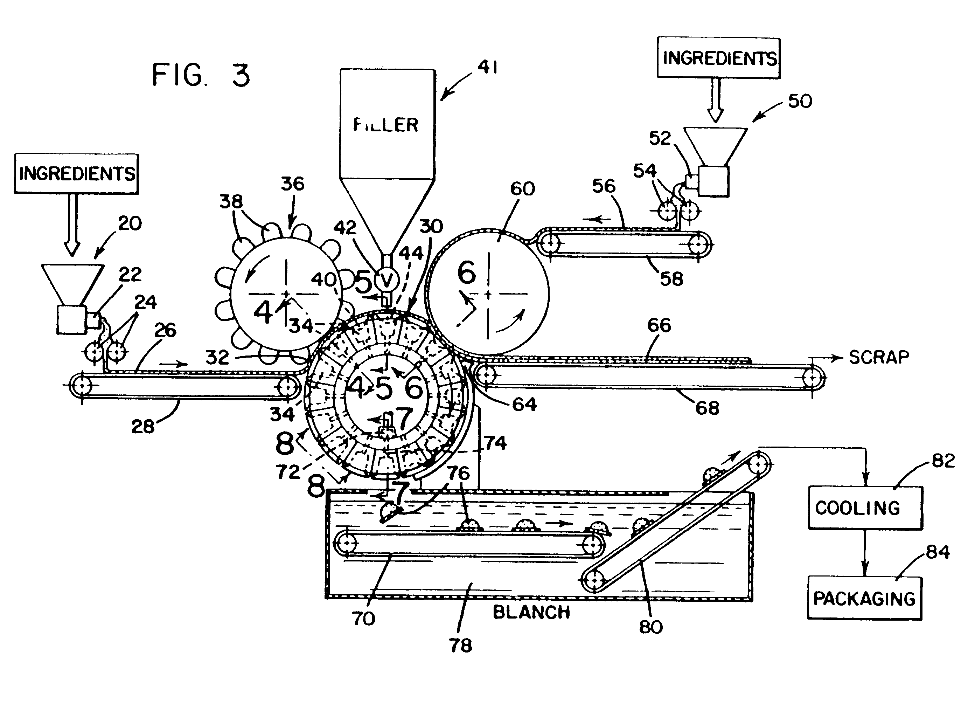

This novel ravoili style food product of the present invention may be commercially prepared in mass quantities by an apparatus such as that shown in FIGURE 3. The apparatus of FIGURE 3 comprises a first dough dispensing means 20 containing a quantity of ravioli dough. The ravioli dough is dispensed through exit port 22 and is compressed by rollers 24 to form a first dough sheet 26. The first dough sheet then travels along first dough conveyor 28 to a circular, rotating, multi-cavity forming die 30. Upon reaching the rotating die surface, the first dough sheet 26 is advanced onto the upper surface 32 of the rotating die 30 such that the first dough sheet 26 extends over top of sevral die cavities 34. As the rotating die 30 advances in position, dough sheet 26 is pressed into each die cavity by the cooperating dough forming surfaces 38 of dough plunger means 36. The dough forming surfaces 38 of plunger means 36 are partially spherical at their ends, such that plunging of the dough into each mold cavity 34 will create separate hemispherical indentations 40 of first dough sheet 26 within each mold cavity. As the rotary forming die 30 advances, each hemispherical indentation becomes positioned under filler dispenser 41 for a period of time sufficient to allow a quantity of filler material to pass from filler dispenser 41 through metering device 42 and to be deposited in the particular spherical indentation which is then positioned thereunder 44. A second dough dispensing means 50 is provided whereby dough material is dispensed through second exit port 52 and is forced through second rollers 54 forming a second dough sheet 56. This second dough sheet 56 is then passed along a second dough conveyor 58 to the surface of cooperating compression and cutting means 60. As the rotating multicavity forming die 30 further advances, the cooperating compression and cutting means 60 moves correspondingly, thereby bringing the second dough sheet 56 into horizontal juxtaposition with first dough sheet 26. As the rotating die 30 and cooperating compression cutting means 60 continue to advance, dough sheets 26 and 56 are compressed between the surfaces of the die 30 and the surface of the cooperating compression and cutting means 60. Generally semi-cylindrical indentations are positioned in the surface of the die 30 so as to give rise to a multiplicity of semi-cylindrical crimps extending radially about the peripheral flange of each of said die cavities which serve to form semi-circular crimps in the top surface of the peripheral dough flange as it is formed by the compressive conjoining of the dough sheets 56 and 26. The remaining uncompressed scrap dough is then peeled off of the surface of rotary mold 30 by scrap ejecting means 64 which is positioned so as to scrape the remaining dough from the surface of rotating mold 30. The scrap ejecting means 64 is formed in such a manner that the scrap dough material 66 is directed onto scrap conveyor 68 for subsequent collection. The scrap dough so collected may be reintroduced through either the first or second dough dispensing means 20, 50 or it may be discarded. As the rotating multi-cavity forming die 30 continues to advance, each die cavity containing an individual cut ravioli will become momentarily positioned over the top of a catch conveyor 70. When in such position, air pressure is permitted to flow from pressure source 72 through pressure conduit 74 thereby creating positive pressure within the particular die cavity which is, at the time, positioned over top of the catch conveyor 70. This positive pressure forces ejection of the cut ravioli 76 from the die cavity into catch conveyor 70. Catch conveyor 70, as shown in FIGURE 3, is located within a blanching chamber 78 and the ravioli moves slowly along conveyor 70 in blanching chamber 78, thereby completing the blanching process. As the blanched ravioli arrive at the end of the conveyor 70, they are deposited onto transfer conveyor 80 which in turn transports the ravioli for the subsequent steps of cooling and packaging which are diagramatically represented by blocks 82 and 84 respectively.

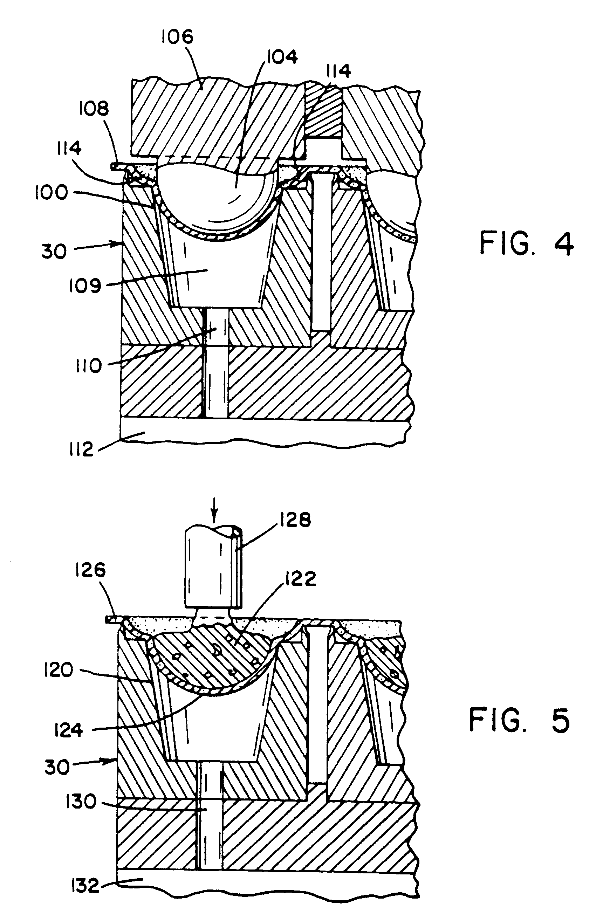

The formation of the inventive crimped peripheral flange on each of the ravioli products prepared by the device of FIGURE 3 may be clearly appreciated by cut away FIGURES 4-7 wherein an individual cavity of the rotating multi-cavity forming die is shown at various points during the process. The numbers 4 through 7 are labeled on FIGURE 2, showing the various points in the process to which FIGURES 4 through 7 correspond. FIGURE 4 shows a die cavity 100 wherein one of the hemispherical plunger tips 104 of cooperating dough plunger means 106 has been advanced into the die cavity 100 thereby creating a bulbous indentation of dough sheet 108 within central cavity 109. Attendant pressure conduit 100 is inoperative as it is fully blocked by the solid hub 112 of the rotating multi-cavity forming die.

FIGURE 5 depicts a single cavity 120 of the multi-cavity forming die during the filling process, whereby filling material 122 is deposited in the previously made bulbous indentation 124 of dough sheet 126 through output port 128 of the filler dispensing device. Again, air pressure conduit 130 remains in its inoperative state as the lumen of conduit 130 abuts the solid hub 132 of the rotating multi-cavity forming die.

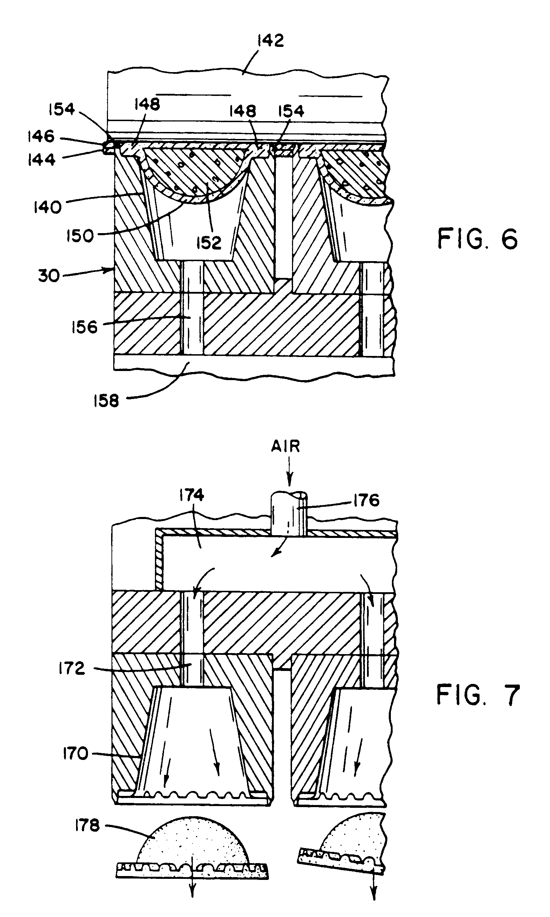

FIGURE 6 shows the interaction of a single cavity 140 of the rotating multi-cavity forming die with the surface of cooperating compression and cutting means 142. First dough sheet 144 and second dough sheet 146 have been compressed to form a single flange 148 around the bulbous indentation 150 of first dough sheet 144 thereby encapsulating a portion of filling material 152 therein. Dough cutting projection 154 extends from the face of the rotating multi-cavity forming die 30 thereby defining the desired outside diameter of the ravioli product formed therein. The slight angle of the dough cutting projections result in the cutting of the outside diameter of each ravioli in a generally angular member such that the portion of the peripheral outer flange of the ravioli that is furthest into the mold cavity is slightly less in diameter than that portion of the peripheral outer flange to which its outermost in the mold cavity. This slight angling of the outer edge of the ravioli facilitates subsequent release of the ravioli from the die cavity. Again, pressure conduit 156 remains blocked by the solid hub 158 of the rotating multi-cavity forming die.

Release of the ravioli from the forming die cavity occurs as shown in FIGURE 7. FIGURE 7, like the previous three figures, shows an individual cavity 170 of the rotating multi-cavity forming die 30. The air pressure conduit 172 is, at this point, open to pressure manifold 174 which is pressurized via air pressure source 176. Thus, positive pressure is conveyed through pressure conduit 172 into individual mold cavity 170 thereby causing ejection of the ravioli 178 in a downward direction.

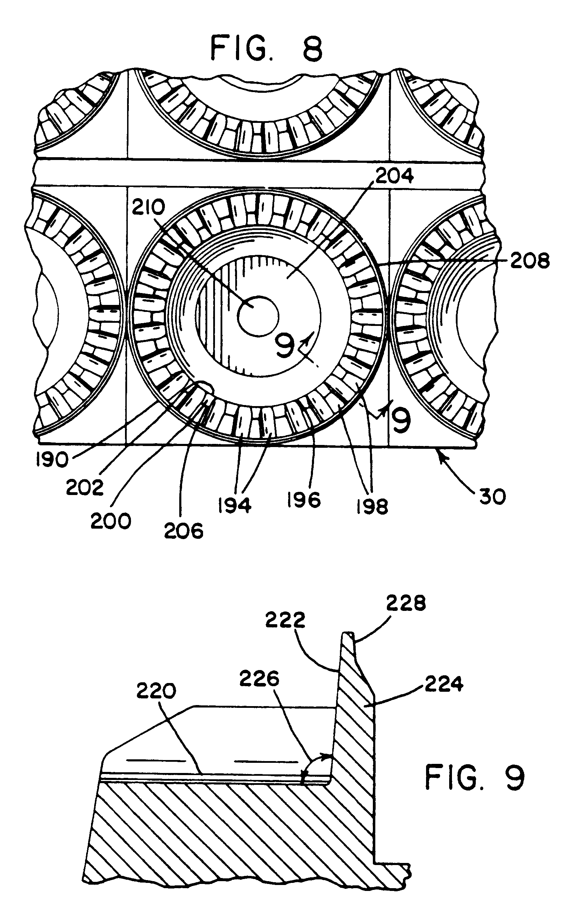

A plan view of a single die cavity 190 of the multi-cavity die 30 is shown in FIGURE 8. Such bevel or fillet provides a sharp transition of dough from the central bulbous area to the peripheral flange. Avoidance of the sharp transition prevents dough sticking and attendant problems in demolding the ravioli from the die cavity. A multiplicity of semi-cylindrical indentations 194 are positioned around the peripheral flange 196 of the die cavity 190. In this preferred embodiment, each such semi-cylindrical depression 194 is generally narrowed at its innermost edge of the peripheral flange 196, while the areas between the semi-cylindrical depressions 194 are generally flat at 198 and with a slight bevel or fillet 200 running from the outer rim 202 of the central cavity 204 to a position 206 approximately one-third of the width of the peripheral flange 196. At the extreme outer edge of the peripheral flange 196 is the solid dough cutting projection 208. The opening of an air pressure conduit 210 is shown in the center of central cavity 204.

The solid dough cutting projection which extends around the periphery of each mold cavity is shown in isolated, cross-sectional representation as FIGURE 9. The horizontal base of the flange portion of the die cavity 220 and the inner surface 222 of dough cutter 224 form a sligity obtuse angle 226. Additionally, outer dough cutter 224 is narrowed at its tip 228 so as to provide for efficient cutting of the dough as it articulates with the opposing surface of the cooperating compression and cutting means described in connection with FIGURE 3.

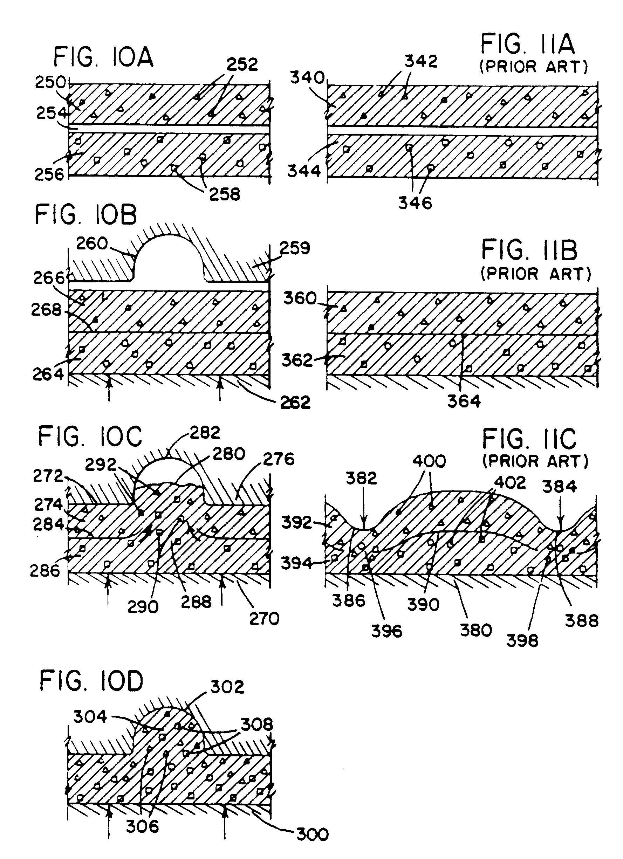

The inventive semi-cylindrical crimps positioned around the peripheral flange of the ravioli bring about firm interlocking of the upper and lower dough sheets. FIGURES 10A through 10D illustrate the means by which such interlocking occurs. In FIGURE 10A, the upper dough sheet 250 is marked with small diamonds 252 and lower dough sheet 256 is marked with squares 258. As shown in FIGURE 10A, the sheets are generally situated in horizontal juxtaposition to one another with a narrow space 254 in between. In FIGURE 10B, a cut away portion of the mold cavity 259 is shown wherein a single semi-cylindrical depression 260 is located. The lower opposing surface 262 is forced against lower dough sheet 264 thereby advancing it into contact with upper dough sheet 266. The horizontal contact between upper dough sheet 266 and lower dough sheet 264 forms a knit line 268. In FIGURE 10C, the lower opposing surface 270 is further advanced, to compress both dough sheets and to advance the upper surface 276 of the die cavity. As shown, the upper surface 272 of upper dough sheet 274 is disrupted at 280 by the presence of the semi-cylindrical depression 282 such that dough partially fills said depression 282. Additionally, the knit line 284 between upper dough sheet 274 and lower dough sheet 286 is disrupted at a region 288 directly beneath the semi-cylindrical indentation, mixing of the dough from the two dough sheets 274 and 286 is illustrated by the coming of the squares 290 originating from lower dough sheet 286 with the diamonds 292 originating from upper dough sheet 274. In FIGURE 10D, the lower opposing surface 300 has been fully advanced. The upper and lower dough sheets are shown to be fully compressively conjoined with the entire semi-cylindrical depression 302 of the die cavity having been filled with dough thereby forming a crimp 304 in the surface of the dough. The interlocking of the upper and lower dough sheets is clearly depicted by the intermingling of the diamond shapes 306 which had originated from the upper dough sheet and the square shapes 308 which had originated from the lower dough sheet. Also, there is no longer a discernible knit line dividing the upper and lower dough sheets.

FIGURES 11A through 11C depict, in a similar fashion, the prior art method of merely applying compressive force to the upper and lower dough sheets without the presence of the semi-cylindrical crimps. FIGURE 11A shows upper dough sheet 340 which is tagged with diamond shapes 342 and lower dough sheet 344 which is tagged with square shapes 346. The dough sheets are generally horizontally juxtapositiond. In FIGURE 11B, the dough sheets 360, 362 have been advanced into horizontal contact with one another forming knit line 364. FIGURE 11C shows the dough sheets being directly compressed on a flat surface 380 at two separate points, 382 and 384. Such compression results in invaginations 386 and 388 of the dough at points directly beneath the compression points 382 and 384 respectively. Accordingly, the dough knit line 390 which exists between the upper dough sheet 392 and the lower dough sheet 394 may be slightly disrupted at points 396 and 398. Such slight disruption is illustrated by minimal intermingling of the diamonds 400 of the upper dough sheet 392 and the squares 402 of the lower dough sheet 394 at two regions 396 and 398. The intermingling of dough from the upper and lower dough sheets does not occur to the degree depicted in FIGURE 10D.

It should be appreciated that the inventive semi-cylindrical crimps may be incorporated into any ravioli style food product which has a peripheral compressed dough flange, regardless of the overall shape of the product.

## Claims

1. A ravioli style food product comprising:
   a first dough sheet;
   a second dough sheet;
   a filling material contained between said first dough sheet and said second dough sheet, in a bulbous central area of one of the dough sheets, the peripheries of said first and second dough sheets being compressively conjoined so as to form a peripheral flange around the food product and to thereby encapsulate said filling material therewithin;
   said peripheral flange being provided with a multiplicity of crimps having a semi-cylindrical form and extending from the inner edge of said peripheral flange to the outer edge of said peripheral flange, and said first and second dough sheets being unified at regions of said flange corresponding to said crimps, and interfacially joined at regions adjacent said crimps.

2. The food product of claim 1 wherein one of the dough sheets is of generally planar configuration while the other dough sheet has a generally planar periphery and a bulbous central area such that, when said dough sheets are interfacially, compressively conjoined at their peripheries, the resultant food product is generally flat on the bottom and generally bulbous on top.

3. The food product of claim 1 or claim 2 wherein the outher tip of each said crimp is formed as a quarter sphere terminating near the outer edge of said peripheral flange.

4. The food product of any one of claims 1 to 3 having a generally round overall configuration when viewed from a position perpendicular to the surface of said peripheral flange.

5. The food product of any one of claims 1 to 3 having a generally ovoid overall configuration when viewed from a position perpendicular to the surface of said peripheral flange and having minor and major horizontal axes.

6. The ovoid shaped food product of claim 5 wherein the ratio of major to minor horizontal axes is less than about 3:1.

7. A method of preparing a ravioli style food product, said method comprising the steps of:
   (a) moving a first dough sheet along a feed line such that at least a portion of said dough sheet is in a generally horizontal plane at at least one selected position on said feed line;
   (b) indenting said first dough sheet at a first location on said feedline;

(c) depositing a selected amount of filling material in said indentation at a second location on said feed line subsequent to said first location;

(d) positioning a second dough sheet so as to interface with first dough sheet at a third location on said feed line;

(e) compressively conjoining said first and said second dough sheets at a fourth location on said feed line so as to form a flange around each said indentation containing said filling material; and, simultaneously providing at least one surface of said flange with a multiplicity of semi-cylindrical crimps, each said crimp extending from the bulbous midregion to the outher periphery of the flange, said crimps being positioned around and along said flange and formed by displacement of said dough sheets in a direction perpendicular to said sheets;

(f) cutting away excess dough from the outer periphery of said flange.

8. The method of claim 7 including the additional steps of:

(g) blanching; followed by

(h) freezing; followed by

(i) maintaining said product in said frozen state until consumption is desired; and subsequently

(j) warming said product prior to consumption.

9. An apparatus for preparing a ravioli style food product, said apparatus being comprised of:

(a) a means for positioning a first dough sheet on a feed line such that at least a portion of said dough sheet is, at some point on said feed line, in a generally horizontal plane;

(b) a means for making an indentation in said first dough sheet at a first location on said feed line,

(c) a means for depositing a selected amount of filling material in said indentation at a second location on said feed line subsequent to said first location;

(d) a means for positioning a second dough sheet so as to interface with first dough sheet at a third location on said feed line;

(e) a means for compressively conjoining said first and said second dough sheets at a fourth location on said feed line so as to form a flange around each said indentation containing said filling material and simultaneously providing each of said flanges with a multiplicity of semi-cylindrical crimps extending around and along said flange and being formed by displacement of said dough sheets in a direction perpendicular to said sheets;

(f) a means for cutting away excess dough from the outer periphery of said flange to define the outside diameter of said ravioli style food product.

**Revendications**

1. Produit alimentaire du style ravioli, comportant :

une première feuille de pâte ;

une seconde feuille de pâte ;

une matière de garniture contenue entre ladite première feuille de pâte et ladite seconde feuille de pâte, dans une zone centrale bulbeuse de l'une des feuilles de pâte, les périphéries desdites première et seconde feuilles de pâte étant jointes ensemble par compression afin de former un rebord périphérique autour du produit alimentaire et d'envelopper ainsi à l'intérieur ladite matière de garniture ;

ledit rebord périphérique étant pourvu d'une multitude de gaufrures ayant une forme semi-cylindrique et s'étendant depuis le bord intérieur dudit rebord périphérique jusqu'au bord extérieur dudit rebord périphérique, et lesdites première et seconde feuilles de pâte étant réunies en des zones dudit rebord correspondant auxdites gaufrures, et jointes de façon interfaciale en des zones adjacentes auxdites gaufrures.

2. Produit alimentaire selon la revendication 1, dans lequel l'une des feuilles de pâte est de configuration globalement plane tandis que l'autre feuille de pâte possède une périphérie globalement plane et une zone centrale bulbeuse telle que, lorsque lesdites feuilles de pâte sont jointes ensemble par compression, de façon interfaciale, à leurs périphéries, le produit alimentaire résultant soit globalement plat sur le dessous et globalement bulbeux sur le dessus.

3. Produit alimentaire selon la revendication 1 ou la revendication 2, dans lequel le bout extérieur de chacune desdites gaufrures est réalisé sous la forme d'un quart de sphère aboutissant à proximité du bord extérieur dudit rebord périphérique.

4. Produit alimentaire selon l'une quelconque des revendications 1 à 3, ayant une configuration globale généralement ronde telle que vue depuis une position perpendiculaire à la surface dudit rebord périphérique.

5. Produit alimentaire selon l'une quelconque des revendications 1 à 3, ayant une configuration globale généralement ovoïde telle que vue depuis une position perpendiculaire à la surface dudit rebord périphérique et ayant des petit et grand axes horizontaux.

6. Produit alimentaire de forme ovoïde selon la revendication 5, dans lequel le rapport du grand axe horizontal au petit axe horizontal est inférieur à environ 3:1.

7. Procédé de préparation d'un produit alimentaire du style ravioli, ledit procédé comprenant les étapes qui consistent :

(a) à déplacer une première feuille de pâte suivant une ligne d'avance telle qu'au moins une partie de ladite feuille de pâte se trouve dans un plan globalement horizontal en au moins une position choisie sur ladite ligne d'avance ;

(b) à réaliser une empreinte dans ladite première feuille de pâte en un premier emplacement sur ladite ligne d'avance ;

(c) à déposer une quantité choisie de matière de garniture dans ladite empreinte en un deuxième emplacement sur ladite ligne d'avance à la suite dudit premier emplacement ;

(d) à positionner une seconde feuille de pâte afin qu'elle soit en interface avec la première feuille de pâte en un troisième emplacement sur ladite ligne d'avance ;

(e) à joindre ensemble par compression lesdites première et seconde feuilles de pâte en un quatrième emplacement sur ladite ligne d'avance afin de former un rebord autour de chaque empreinte contenant ladite matière de garniture ; et simultanément à pourvoir au moins une surface dudit rebord d'une multitude de gaufrures semi-cylindriques, chacune desdites gaufrures s'étendant depuis la zone médiane bulbeuse jusqu'à la périphérie extérieure du rebord, lesdites gaufrures étant positionnées autour et le long dudit rebord et étant formées par un déplacement desdites feuilles de pâte dans une direction perpendiculaire auxdites feuilles ;

(f) à éliminer par coupe la pâte excédentaire de la périphérie extérieure dudit rebord.

8. Procédé selon la revendication 7, comprenant les étapes supplémentaires qui consistent en :

(g) un blanchiment ; suivi de

(h) une congélation ; suivie de

(i) le maintien dudit produit dans ledit état congelé jusqu'à ce qu'on souhaite le consommer ; et ensuite

(j) un réchauffement dudit produit avant la consommation.

9. Appareil de préparation d'un produit alimentaire du style ravioli, ledit appareil étant constitué de :

(a) un moyen destiné à positionner une première feuille de pâte sur une ligne d'avance afin qu'au moins une partie de ladite feuille de pâte soit, en un certain point sur ladite ligne d'avance, dans un plan globalement horizontal ;

(b) un moyen destiné à réaliser une empreinte dans ladite première feuille de pâte en un premier emplacement sur ladite ligne d'avance ;

(c) un moyen destiné à déposer une quantité choisie d'une matière de garniture dans ladite empreinte en un deuxième emplacement sur ladite ligne d'avance à la suite dudit premier emplacement ;

(d) un moyen destiné à positionner une seconde feuille de pâte afin qu'elle soit en interface avec la première feuille de pâte en un troisième emplacement sur ladite ligne d'avance ;

(e) un moyen destiné à joindre ensemble par compression lesdites première et seconde feuilles de pâte en un quatrième emplacement sur ladite ligne d'avance afin de former un rebord autour de chaque empreinte contenant ladite matière de garniture et à pourvoir simultanément chacun desdits rebords d'une multitude de gaufrures semi-cylindriques s'étendant autour et le long dudit rebord et formées par déplacement desdites feuilles de pâte dans une direction perpendiculaire auxdites feuilles ;

(f) un moyen destiné à éliminer par coupe la pâte excédentaire de la périphérie extérieure dudit rebord pour définir le diamètre extérieur dudit produit alimentaire du style ravioli.

## Patentansprüche

1. Ravioli-artiges Nahrungsmittel mit:
einer ersten Teiglage;
einer zweiten Teiglage;
einem Füllmaterial, das zwischen der ersten Teiglage und der zweiten Teiglage in einer ausgewölbten zentralen Zone einer der Teiglagen enthalten ist, wobei die Umfänge der ersten und der zweiten Teiglage unter Druck miteinander verbunden sind, um einen Umfangsflansch um das Nahrungsmittel herum zu bilden und dadurch in diesem das Füllmaterial einzuschließen;

wobei der Umfangsflansch mit einer Vielzahl von Auskröpfungen versehen ist, die halbzylindrische Form haben und sich vom Innenrand des Umfangsflansches zu dessen Außenrand erstrecken, und wobei die erste und die zweite Teiglage in Bereichen des Flansches miteinander vereinigt sind, welche den Auskröpfungen entsprechen, und in Bereichen zwischen den Auskröpfungen miteinander flächig verbunden sind.

2. Nahrungsmittelprodukt nach Anspruch 1, bei welchem eine der Teiglagen allgemein flache Form hat, wogegen die andere Teiglage allgemein flachen Umfang und eine ausgewölbte zentrale Zone aufweist, so daß, wenn die Teiglagen an ihren Umfängen unter Druck flächig miteinander verbunden werden, das resultierende Nahrungsmittelprodukt am Boden allgemein flach und an der Oberseite ausgewölbt ist.

3. Nahrungsmittelprodukt nach Anspruch 1 oder 2, bei welchem die äußere Spitze jeder Auswölbung als Viertelkugel ausgebildet ist, die nahe dem äußeren Rand des Umfangsflansches endet.

4. Nahrungsmittelprodukt nach einem der Ansprüche 1 bis 3, das allgemein runde Gesamtform hat, gesehen aus einer Position senkrecht zur Oberfläche des Umfangsflansches.

5. Nahrungsmittelprodukt nach einem der Ansprüche 1 bis 3, das allgemein eiförmige Gesamtform hat, gesehen aus einer Position senkrecht zur Oberfläche des Umfangsflansches, und eine kleinere sowie eine größere Horizontalachse aufweist.

6. Eiförmiges Nahrungsmittelprodukt nach Anspruch 5, bei welchem das Verhältnis der größeren zur kleineren Horizontalachse kleiner als etwa 3:1 ist.

7. Verfahren zum Herstellen eines Ravioli-artigen Nahrungsmittelproduktes, wobei das Verfahren die folgenden Schritte umfaßt:

(a) Bewegen einer ersten Teiglage entlang einer Vorschublinie derart, daß zumindest ein Teil der Teiglage an zumindest einer ausgewählten Stelle der Vorschublinie in einer allgemein horizontalen Ebene liegt;

(b) Ausbilden einer Vertiefung in der ersten Teiglage an einer ersten Stelle der Vorschublinie;

(c) Ablagern einer vorbestimmten Menge an Füllmaterial in die Vertiefung an einer zweiten Stelle der Vorschublinie, die auf die erste Stelle folgt;

(d) Positionieren einer zweiten Teiglage derart, daß sie mit der ersten Teiglage an einer dritten Stelle der Vorschublinie in Flächenberührung kommt;

(e) Verbinden der ersten und der zweiten Teiglage an einer vierten Stelle der Vorschublinie unter Druck, um einen Flansch um jede Vertiefung zu bilden, welche das Füllmaterial enthält; und gleichzeitig Ausformen zumindest einer Oberfläche des Flansches mit einer Vielzahl von halbzylindrischen Auskröpfungen, die sich je von der gewölbten zentralen Zone zum Außenumfang des Flansches erstrecken, wobei die Auskröpfungen um den Flansch herum und entlang desselben angeordnet und durch Verdrängung der Teiglagen in einer Richtung senkrecht zu den Lagen gebildet sind;

(f) Wegschneiden überschüssigen Teiges vom Außenumfang des Flansches.

8. Verfahren nach Anspruch 7, welches die zusätzlichen Schritte umfaßt:

(g) Bleichen; gefolgt von

(h) Gefrieren; gefolgt von

(i) Halten des Produktes im Gefrierstadium bis der Verzehr erwünscht ist; und nachfolgend

(j) Erwärmen des Produktes vor dem Verzehr.

9. Vorrichtung zum Herstellen eines Ravioli-artigen Nahrungsmittelproduktes, wobei die Vorrichtung umfaßt:

(a) Mittel zum Positionieren einer ersten Teiglage auf einer Vorschublinie, derart, daß zumindest ein Teil der Teiglage an einem Punkt der Vorschublinie in einer allgemein horizontalen Ebene liegt;

(b) Mittel zum Herstellen von Vertiefungen in der ersten Teiglage an der ersten Stelle der Vorschublinie;

(c) Mittel zum Ablagern einer vorbestimmten Menge an Füllmaterial in den Vertiefungen an einer zweiten Stelle der Vorschublinie, die auf die erste Stelle folgt;

(d) Mittel zum Positionieren einer zweiten Teiglage derart, daß sie mit der ersten Teiglage an einer dritten Stelle der Vorschublinie in flächige Berührung kommt;

(e) Mittel zum Verbinden der ersten und der zweiten Teiglage unter Druck an einer vierten Stelle der Vorschublinie, um einen Flansch um jede Vertiefung zu bilden, welche das Füllmaterial enthält, und gleichzeitig Ausbilden einer Vielzahl von halbzylindrischen Auskröpfungen in jedem der Flansche, die sich um den Flansch und entlang desselben erstrecken, und durch Verdrängung der Teiglagen in Richtung senkrecht zu den Lagen geformt werden;

(f) Mittel zum Wegschneiden überschüssigen Teiges vom Außenumfang des Flansches, um den Außendurchmesser des Ravioli-artigen Nahrungsmittelproduktes zu bilden.

# FIG. 1

# FIG. 2

FIG. 3

FIG. 4

FIG. 5

13

FIG. 6

FIG. 7

AIR

FIG. 8

FIG. 9

FIG. IOA

FIG. IIA
(PRIOR ART)

FIG. IOB

FIG. IIB
(PRIOR ART)

FIG. IOC

FIG. IIC
(PRIOR ART)

FIG. IOD